(19) Europäisches Patentamt
European Patent Office
Office européen des brevets

(11) Publication number: 0 045 975
B1

(12) **EUROPEAN PATENT SPECIFICATION**

(45) Date of publication of patent specification: **19.04.89**

(51) Int. Cl.[4]: **C 08 F 10/00**, C 08 F 4/64, C 08 F 4/02

(21) Application number: **81106299.1**

(22) Date of filing: **13.08.81**

(60) **Divisional application 86112847 filed on 17.09.86.**

# (54) Components and catalysts for the polymerization of olefins.

(30) Priority: **13.08.80 IT 2414180**

(43) Date of publication of application:
**17.02.82 Bulletin 82/07**

(45) Publication of the grant of the patent:
**19.04.89 Bulletin 89/16**

(84) Designated Contracting States:
**AT BE CH DE FR GB IT LI NL SE**

(56) References cited:
**DE-A-3 002 879**

**CHEMICAL ABSTRACTS, vol. 82, no. 12, June 16, 1975, page 24, abstract 157035f, COLUMBUS, OHIO (US) & JP A 74 133 498 (NISSAN CHEMICAL INDUSTRIES LTD.), 21.12.1974**

**The file contains technical information submitted after the application was filed and not included in this specification**

(73) Proprietor: **Montedison S.p.A.**
**Patents & Licensing Dept. Foro Buonaparte, 31**
**P.O. Box 10528**
**I-20121 Milan (IT)**

(72) Inventor: **Parodi, Sandro**
**4, via dei Negri Oleggio**
**Novara (IT)**
Inventor: **Nocci, Roberto**
**170, corso XXIII Marzo**
**Novara (IT)**
Inventor: **Giannini, Umberto, Dr.**
**53, via Sismondi**
**Milano (IT)**
Inventor: **Barbe, Pier Camillo, Dr.**
**3, via Pavone**
**Ferrara (IT)**
Inventor: **Scata, Umberto**
**31, via C. Battisti**
**Ferrara (IT)**

(74) Representative: **Kinzebach, Werner, Dr. et al**
**Patentanwälte Reitstötter, Kinzebach und Partner Sternwartstrasse 4 Postfach 86 06 49**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 045 975 B1

(56) References cited:

CHEMICAL ABSTRACTS, vol. 85, no. 12, September 20, 1976, page 24, abstract 78682y, COLUMBUS, OHIO (US) & JP A 76 55 386 (MITSUBISHI PETROCHEMICAL Co., Ltd.), 15.5.1976

JAPANESE PATENTS GAZETTE, week A33, July 9-15, 1978; issued September 25, 1978, Derwent Publications Ltd., LONDON (GB). Polymer Chemistry, page 12, ref. 59774A/33 & JP A 78/080 382 (MITSUBISHI) 15.7.1978

**Description**

The present invention refers to catalysts for the polymerization of α-olefins and to a process for the polymerization of α-olefins.

The supported highly active and highly stereospecific catalysts up to now known for the polymerization of propylene and higher olefins, are obtained by the reaction of an Al-alkyl compound partially complexed with an electron donor compound (outside donor) with a solid component comprising a Ti compound and an electron-donor compound (inside donor) supported on a Mg-halide in active form.

Examples of such catalysts have been described in British Patent No. 1,559,194 and Belgian Patent No. 868,682.

DE—A—3 002 879 discloses a process for the polymerization of α-olefins using a catalyst which comprises a titanium compound on a support, an organo aluminium compound and an electron donating compound. The titanium compound is obtained by contacting a titanium halide with copulverized products of a magnesium halide, an organo silicium compound having at least one alkoxy group and a halogenated hydrocarbon.

JP—A—74—133 498 disclosed catalysts for the polymerization of ethylene without an outside donor. The catalysts consist of

(a) a component which is insoluble in inert hydrocarbon solvents and which is prepared by reacting an anhydrous or hydrated magnesium halide with silicon compounds containing alkoxy groups and then reacting the reaction product with titanium or vanadium halides and

(b) an organo aluminum compound.

JP—A—76—55 386 has similar disclosure.

The above supported catalysts need the use of an inside donor in order to obtain polymers having a high isotactic index. If the inside donor is omitted polymers having low isotactic index are obtained.

It has now unexpectedly been found that it is possible to obtain in a high yield polymers of alpha olefins having a high isotactic index by using Ti-containing Mg dihalides-supported catalysts free from inside electron donor compounds if an outside donor is used which is a silicon compound containing Si—OR, Si—OCOR or Si—$NR_2$ bonds, and if the silicon compound used as outside donor is present as inside donor also in the Ti-containing Mg dihalide-supported component in amounts corresponding to molar ratios between the silicon compound and the supported halogenated Ti-compound comprised between 0.1 and 5.

The above results are surprising if one considers that catalysts are known which are prepared by using both as inside and outside donor a silicon compound containing Si—O—C bonds and which do not offer a performance in terms of activity and stereospecificity better than the one obtainable with catalysts in which an ester of benzoic acid is used as inside and outside donor.

The rather poor performance of the above prior art catalysts is due to the fact that the Si-containing inside donor is substantially removed from the Ti-containing supported component as result of the method of preparation of said component.

This invention relates to catalysts for the polymerization of alpha-olefins obtainable by reacting

a) an organoaluminium compound,

b) an electron-donor compound and

c) a solid component comprising a Ti-compound and an electron-donor compound supported on a Mg-dihalide in active form,

which are characterized in that

a) an Al-trialkyl compound or an Al-alkyl compound containing 2 or more Al atoms linked to each other via an oxygen or nitrogen atom or via $SO_4$ or $SO_3$ groups is used as an organo aluminium compound;

b) a silicon compound containing one or more Si—$OR^1$, Si—$OCOR^1$ or Si—$NR^1_2$ bonds ($R^1$ being a hydrocarbyl radical) is used as an electron-donor compound; and

c) a solid product consisting of as essential component at least an anhydrous Mg-dihalide in active form as essential support and supported on said dihalide a Ti-halide or a Ti-haloalcoholate and a silicon compound containing one or more Si—$OR^1$, Si-$OCOR^1$ or Si—$NR^1_2$ bonds ($R^1$ being a hydrocarbyl radical) in an amount corresponding to a molar ratio with the supported halogenated Ti-compound of 0.1 to 5 moles per mole of the Ti compound, said solid product being obtainable by comilling the anhydrous-Mg-dihalide, the Ti-halide or the Ti-haloalcoholate and the silicon compound, then heat treating the milled product in a halogenated hydrocarbon and separating said solid product.

wherein the anhydrous Mg-dihalide in active form is

a Mg-dihalide showing in the X-ray powder spectrum of component c) a broadening of at least 30% of the most intense diffraction line which appears in the powder spectrum of the corresponding dihalide having 1 $m^2/g$ of surface area or

a Mg-dihalide showing an X-ray powder spectrum in which said most intense diffraction line is replaced by a halo with the intensity peak shifted with respect to the interplanar distance of the most intense line, and/or

a Mg-dihalide having a surface area, measured after treatment of component c) with boiling $TiCl_4$ for 2 hours, greater than 3 $m^2/g$.

The invention also relates to the use of a solid component comprising an anhydrous Mg dihalide in

active form as essential support and supported on said Mg dihalide a Ti halide or a Ti haloalcoholate and an electron donor compound selected from a Si-compound containing one or more Si—$OR^1$, Si—$OCOR^1$ or Si—$NR^1_2$ bonds ($R^1$ being a hydrocarbyl radical) in an amount corresponding to a molar ratio with the supported halogenated Ti compound of 0.1 to 5 mols per mol of the Ti compound, wherein the anhydrous Mg dihalides in active form are the Mg dihalides showing in the X-ray powder spectrum of component c) a broadening of at least 30% of the most intense diffraction line which appears in the powder spectrum of the corresponding dihalide having 1 $m^2/g$ of surface area or the Mg dihalides showing an X-ray powder spectrum in which said most intense diffraction line is replaced by a halo with the intensity peak shifted with respect to the interplanar distance of the most intense line, and/or the Mg dihalides having a surface area, measured after treatment of component c) with boiling $TiCl_4$ for 2 hours, greater than 3 $m^2/g$ for the preparation of a cataylst according to claim 1.

According to a preferred embodiment of the present invention the Mg dihalide is Mg dichloride and Mg dibromide, the Ti halide is a Ti-tetrahalide and the silicon compound is a phenyl di- or trialkoxysilane or an alkyl di- or trialkoxysilane.

Very active forms of Mg-dihalides are those showing a X-ray powder spectrum in which the most intense diffraction line appearing in the spectrum of the corresponding halide having 1 $m^2/g$ of surface area is decreased in relative intensity and broadened to form a halo or are those in which said most intense line is replaced by a halo having its intensity peak shifted with respect to the interplanar distance of the most intense line. Generally the surface area of the above forms is higher than 30—40 $m^2/g$ and is comprised in particular between 100—300 $m^2/g$.

Active forms are also those deriving from the above forms by heat-treatment in inert hydrocarbon solvents and showing in the X-ray spectrum sharp diffraction lines in place of the halos.

The sharp, most intense line of these forms shows a broadening of at least 30% with respect to the corresponding line of the Mg-dihalide having 1 $m^2/g$ of surface area. Preferred Mg-dihalides are Mg-dichloride and Mg-dibromide. The content in water of the dihalides is generally less than 1% by weight.

"Ti-halides or Ti-haloalcoholates supported on the active Mg-dihalide" means that the above compounds may be chemically or physically fixed on the support and not extractable from component c) by treatment of the same with boiling 1,2 - dichloroethane for 2 hours.

Components a), b) and c) may be reacted with each other in any order; preferably, however, components a) and b) are premixed before being contacted with component c).

The pre-mixing of a) and b) is conducted at temperatures comprised, usually, between room temperature and the temperature used in the polymerization process.

The pre-reaction of c) and b) may be carried out also at higher temperatures. Compound b) may be also incorporated and reacted with component c) itself. Component b) is reacted in a molar ratio with respect to the halogenated Ti compound supported on component c) of at least 1 and in a molar ratio with respect the Al-alkyl compound used as component a) of less than 20 and preferably comprised between 0.05 to 0.3.

In component c) the molar ratio between the Mg-dihalide and the halogenated Ti-compound supported therein is comprised between 1 and 500 and the molar ratio between said halogenated Ti-compound and the electron-donor supported on the Mg-dihalide is comprised between 0.1 and 50. The silicon compounds set forth in b) include compounds of general formula:

$$R_mSiY_nX_p$$

wherein:

R is an alkyl, alkenyl, aryl, arylalkyl, cycloalkyl radical with from 1 to 20 carbon atoms;

Y is a —$OR^1$, —$OCOR^1$, —$NR^1_2$ wherein $R^1$, which may be the same as R or different from R, has the same meanings as R;

X is either a halogen or hydrogen atom or a —OCOR″, —$NR_2$″ group wherein R″, either equal to or different from R′, has the same meaning as R′;

m, n and p are numbers comprised respectively between:

m between 0 and 3, n between 1 and 4 and p between 0 and 1; and m+n+p is equal to 4.

Other silicon compounds that may be used are compounds in which two or more silicon atoms are bound to each other through oxygen or nitrogen atoms.

Examples of these compounds are hexaethoxydisiloxane, simmetrical diphenyltetraethoxydisiloxane

$$(C_2H_5O)_2—\underset{\large C_6H_5}{\overset{}{\underset{|}{Si}}}—O—CH_2—CH_2—O—\underset{\large C_6H_5}{\overset{}{\underset{|}{Si}}}—(OC_2H_5)_2$$

Preferred silicon compounds are: phenylalkoxysilanes as phenyltriethoxy, or trimethoxysilane, diphenyldimethoxy and diethoxysilane, monochlorophenyldiethoxysilane; alkylalkoxysilanes as ethyltriethoxysilane, ethyltriisopropoxysilane.

Examples of other suitable compounds are: chlorotriethoxysilane, acetoxytriethoxysilane, vinyltriethoxysilane, butyltriethoxysilane, triphenylmonoethoxysilane, phenyltricycloethoxysilane, phenyldiethoxydiethylaminosilane, tetraphenoxysilane or tetralkoxysilanes as tetramethoxysilane.

The Al-alkyl compounds forming component a) includes Al-trialkyls as for instance Al-triethyl,

Al-triisobutyl, Al - triisopropyl and compounds containing two or more Al atoms linked to each other through hetero-atoms as:

$$(C_2H_5)_2Al—O—Al(C_2H_5)_2,$$

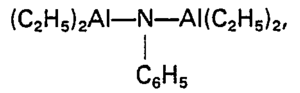

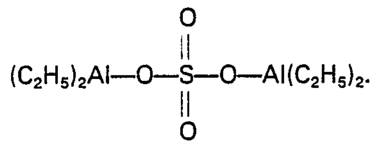

As indicated Al-alkyl compounds in which Al atoms are linked through groups as $SO_4$ or $SO_3$ are also suitable.

The Al-alkyl compounds may be used in mixture with Al-alkyl halides as $AlEt_2Cl$.

Component c) is obtainable by co-milling the Mg-dihalide, the Ti-halide or Ti - haloalcoholate and the silicon compound until the modifications set forth above for the spectrum of the Mg-dihalide appear in the X-ray spectrum of the milled product and heat treating the milled product in suspension in a halogenated hydrocarbon, such as 1,2 - dichloroethane, separation of the solid product and washing with heptane or a similar hydrocarbon solvent. The duration of the treatment is generally comprised between 1—4 hours and it depends on the temperature of treatment.

In all the above methods the final product contains a Mg-dihalide, present in the active form as set forth here above.

Other known methods which lead to the formation of a Mg-dihalide in active form or to Ti- containing Mg-dihalide supported components, in which the dihalide is present in active form, are based on the following reactions:

reaction of a Grignard reagent or a Mg $R_2$-compound (R being a hydrocarbyl radical) or complexes of said Mg $R_2$-compounds with Al-trialkyls, with halogenating agents as $AlX_3$ or Al $R_mX_n$ compounds (X is halogen, R is a hydrocarbyl, $m+n=3$), $SiCl_4$ or $HSiCl_3$;

reaction of a Grignard reagent with a silanol or polysiloxane, $H_2O$ or with an alcohol and further reaction with a halogenating agent or with $TiCl_4$

reaction of Mg with an alcohol and a hydrogen halide or of Mg with a hydrocarbyl halide and an alcohol;

reaction of MgO with $Cl_2$ or $AlCl_3$;

reaction of $MgX_2 \cdot nH_2O$ (X=halogen) with a halogenating agent or $TiCl_4$;

reaction of Mg-mono or dialcoholates or Mg-carboxylates with a halogenating agent.

The Ti-halides or Ti-halogenalcoholates, include in particular the Ti-tetrahalides, Ti-trihalides and Ti - trihalogenalcoholates. Preferred compounds are: $TiCl_4$, TiBr - 4, 2,6 - dimethylphenoxytrichlorotitanium.

The Ti - trihalides are obtained according to known methods, for instance by reduction of $TiCl_4$ with Al or a metallorganic Al-compound or with hydrogen.

In case of the Ti-trihalides it may be convenient for the purpose of improving the performance of the catalysts to carry out an oxidization, even if partial, of the titanium, either during or after the preparation of component c).

To this purpose there may be used halogens, iodine halides.

Preferred catalysts are those in which: component c) is obtained from $MgCl_2$, $TiCl_4$, a silicon compound selected from the groups of phenyl or ethyltriethoxysilane or diphenyldimethoxy or diethoxysilane.

Component a) is an Al-trialkyl as Al-triethyl or Al-triisobutyl.

A preferred method for preparing component c) consists in co-milling $MgCl_2$, $TiCl_4$ and the silicon compound and in treating the milled product with a halogenated hydrocarbon as 1,2-dichloroethane.

The catalysts according to the invention are used to polymerize the alpha-olefins of the formula $CH_2=CHR$ in which R is $C_1$—$C_4$-alkyl or aryl according to known methods that is, in carrying out the polymerization in a liquid phase, either in the presence or absence of an inert hydrocarbon solvent, or in gas phase or also by combining, for instance, a liquid phase polymerization step with a step in gas phase.

In general the temperature is comprised between 40° and 160°C, but preferably between 60° and 90°C, operating either at atmospheric or at greater than atmospheric pressure.

As a molecular weight regulator hydrogen or other regulators of a known type are used.

The catalysts are used particularly suitable in polymerizing propylene, butene-1, styrene, 4-methylpentene. The catalysts may also be used according known methods to polymerize mixtures of propylene and ethylene to form modified polypropylenes having better shock-resistance at low temperatures (the so called block copolymers of propylene and ethylene) or to obtain random crystalline copolymers of propylene with minor proportions of ethylene.

The following examples are given for merely illustrative purpose and are not intended to be in any way limiting the scope of the invention.

Reference Example

Into an inox steel autoclave of 2000 ml holding capacity, equipped with a magnetical stirrer and a thermometer, heat stabilized at 60°C and kept under pressure by a nitrogen atmosphere, there were introduced 5 m moles of triethylaluminium, 1.5 m moles of phenyltriethoxysilane, the solid catalytic component obtained by reacting $TiCl_4$ with $MgCl_2 \cdot 2.3\ C_2H_5OH$, under the same conditions described in Example 1 of Belgian Pat. No. 868,682, and 700 ml of degassed and anhydrous n-heptane, while propylene was also fed in. The catalytic component thus prepared shows a X-ray powder spectrum in which the most intense diffraction line appearing in the spectrum of $MgCl_2$ having 1 $m^2/g$ of surface area was decreased in relative intensity and broadened to form a halo.

Thereupon there was fed in 0.2 atm of hydrogen and then the whole was rapidly heated up to 70°C, while contemporaneously further propylene was fed in to reach a total pressure of 7 atm.

This latter pressure was maintained constant over the whole polymerization by feeding in the monomer. After 4 hours the polymerization was interrupted, the polymer was isolated by filtering and then was dried. The quantity of polymer dissolved in the filtrate was thereupon isolated, weighed and summed to the polymer soluble in boiling n-heptane, for the calculation of the isotacticity index.

The quantity of catalytic component used and the content of Ti in said component, the yield in polymer with respect to the introduced Ti, the isotacticity index (I.I.) and the inherent viscosity determined in tetralin at 35°C, have all been reported in Table I.

Example 1

The reference example was repeated but using a solid catalytic component prepared as follows.

Anhydrous $MgCl_2$, phenyltriethoxysilane in molar ratio Mg/Si of 6, and $TiCl_4$ in molar ratio of 1:1 with respect to the phenyltriethoxysilane were co-milled in a vibrating mill of the type Vibratom manufactured by N. V. TEMA's, Gravenhage (Holland), having a total volume of one liter and containing 3 kg of stainless steel balls of 16 mm diameter.

Grinding was effected employing a filling coefficient equal to 100 g/l of total volume (vacuum), at an interior temperature of the mill of 25°C, and with grinding time of 72 hours.

Charging of the mill with the materials to be ground, the grinding and discharging of the product of the cogrinding from the mill occurred in a nitrogen atmosphere. 10 g of the co-ground product was contacted with 100 ml of 1,2 - dichloroethane at 80° for 2 hours.

After this period, 1,2 - dichloroethane was removed by filtration at 80°C and the residual solid product was repeatedly washed with n-heptane at room temperature till the disappearance of the chloride ions from the filtrate and then was kept in suspension in heptane.

The catalytic components thus prepared showed a X-ray powder spectrum in which the most intense diffraction line appearing in the spectrum of $MgCl_2$ having 1 $m^2/g$ of surface area was decreased in relative intensity and broadened to form a halo.

The characteristics of the solid catalytic component, and the results of polymerization test have been reported in Table I.

TABLE I

| Example No. | Solid catalytic component: Ti content of solid component % by weight | Catalyst mg | Polymerization: $Al(C_2H_5)_3$ / donor (mols) | Yield g polymer / g catalyst component | I.I. % | $\eta$ inh dl/g |
|---|---|---|---|---|---|---|
| reference example | 2.5 | 46 | 3.33 | 7,000 | 80 | 1.3 |
| 1 | 3 | 40 | 10 | 6,300 | 95 | 1.0 |

**Claims for the Contracting States: BE, CH, DE, FR, GB, IT, LI, NL, SE**

1. Catalysts for the polymerization of alpha-olefins obtainable by reacting

a) an organoaluminium compound,

b) an electron-donor compound and

c) a solid component comprising Ti-compound and an electron-donor compound supported on a Mg-dihalide in active form, characterized in that

a) an Al-trialkyl compound or an Al-alkyl compound containing 2 or more Al atoms linked to each other via an oxygen or nitrogen atom or via $SO_4$ or $SO_3$ groups is used as an organo aluminium compound;

b) a silicon compound containing one or more Si—$OR^1$, Si—$OCOR^1$ or Si—$NR^1_2$ bonds ($R^1$ being a hydrocarbyl radical) is used as an electron-donor compound; and

c) a solid product is used consisting of as essential component at least an anhydrous Mg-dihalide in active form as essential support and supported on said dihalide a Ti-halide or a Ti - haloalcoholate and a silicon compound containing one or more Si—$OR^1$, Si—$OCOR^1$ or Si—$NR^1_2$ bonds ($R^1$ being a hydrocarbyl radical) in an amount corresponding to a molar ratio with the supported halogenated Ti-compound of 0.1 to 5 mols per mol of the Ti compound, said solid product being obtainable by comilling the anhydrous-Mg-dihalide, the Ti-halide or the Ti-haloalcoholate and the silicon compound, then heat treating the milled product in a halogenated hydrocarbon and separating said solid product,

wherein the anhydrous Mg-dihalide in active form is

a Mg-dihalide showing in the X-ray powder spectrum of component c) a broadening of at least 30% of the most intense diffraction line which appears in the powder spectrum of the corresponding dihalide having 1 $m^2/g$ of surface area or

a Mg-dihalide showing an X-ray powder spectrum in which said most intense diffraction line is replaced by a halo with the intensity peak shifted with respect to the interplanar distance of the most intense line, and/or

a Mg-dihalide having a surface area, measured after treatment of component c) with boiling $TiCl_4$ for 2 hours, greater than 3 $m^2/g$.

2. Catalysts as defined in claim 1 characterized in that in solid component c) the Mg dihalide is Mg dichloride and Mg dibromide, the Ti halide is a Ti-tetrahalide and the silicon compound is a phenyl di- or trialkoxysilane or an alkyl di- or trialkoxysilane.

3. Use of a solid component comprising an anhydrous Mg dihalide in active form as essential support and supported on said Mg dihalide a Ti halide or a Ti haloalcoholate and an electron donor compound selected from a Si-compound containing one or more Si—$OR^1$, Si—$OCOR^1$ or Si—$NR^1_2$ bonds ($R^1$ being a hydrocarbyl radical) in an amount corresponding to a molar ratio with the supported halogenated Ti compound of 0.1 to 5 mols per mol of the Ti compound, wherein the anhydrous Mg dihalides in active form are the Mg dihalides showing in the X-ray powder spectrum of component c) a broadening of at least 30% of the most intense diffraction line which appears in the powder spectrum of the corresponding dihalide having 1 $m^2/g$ of surface area or the Mg dihalides showing an X-ray powder spectrum in which said most intense diffraction line is replaced by a halo with the intensity peak shifted with respect to the interplanar distance of the most intense line, and/or the Mg dihalides having a surface area, measured after treatment of component c) with boiling $TiCl_4$ for 2 hours, greater than 3 $m^2/g$ for the preparation of a catalyst according to claim 1.

4. Use of a solid component according to claim 3, characterized in that the Mg dihalide is Mg dichloride and Mg dibromide, the Ti halide is a Ti-tetrahalide and the silicon compound is a phenyl di- or trialkoxysilane or an alkyl di- or trialkoxysilane.

5. Process for the polymerization of alpha olefins $CH_2=CHR$ in which R is an alkyl radical with 1 to 4 carbon atoms or an aryl radical and mixtures of said olefins with ethylene, characterized in that the polymerization process is carried out in liquid phase in presence or not of an inert hydrocarbon solvent or in gas phase, in presence of a catalyst as defined in claims 1 and 2.

**Claims for the Contracting State: AT**

1. A process for the production of catalysts for the polymerization of alpha-olefins by reacting

a) an organoaluminium compound,

b) an electron-donor compound and

c) a solid component comprising a Ti-compound and an electron-donor compound supported on a Mg-dihalide in active form, characterized in that

a) an Al-trialkyl compound or an Al-alkyl compound containing 2 or more Al atoms linked to each other via an oxygen or nitrogen atom or via $SO_4$ or $SO_3$ groups is used as an organo aluminium compound;

b) a silicon compound containing one or more Si—$OR^1$, Si—$OCOR^1$ or Si—$NR^1_2$ bonds ($R^1$ being a hydrocarbyl radical) is used as an electron-donor compound; and

c) a solid product is used consisting of as essential component at least an anhydrous Mg-dihalide in active form as essential support and supported on said dihalide a Ti-halide or a Ti - haloalcoholate and a silicon compound containing one or more Si—$OR^1$, Si—$OCOR^1$ or Si—$NR^1_2$ bonds ($R^1$ being a hydrocarbyl radical) in an amount corresponding to a molar ratio with the supported halogenated Ti-compound of 0.1 to 5 moles per mol of the Ti compound, said solid product being obtainable by comilling the anhydrous-Mg-dihalide, the Ti-halide or the Ti-haloalcoholate and the silicon compound, then heat treating the milled product in a halogenated hydrocarbon and separating said solid product,

wherein the anhydrous Mg-dihalide in active form is

a Mg-dihalide showing in the X-ray powder spectrum of component c) a broadening of at least 30% of the most intense diffraction line which appears in the powder spectrum of the corresponding dihalide having 1 $m^2/g$ of surface area or

a Mg-dihalide showing an X-ray powder spectrum in which said most intense diffraction line is replaced by a halo with the intensity peak shifted with respect to the interplanar distance of the most intense line, and/or

a Mg-dihalide having a surface area, measured after treatment of component c) with boiling $TiCl_4$ for 2 hours, greater than 3 $m^2/g$.

2. A process for the production of catalysts as defined in claim 1, characterized in that in solid component c) the Mg dihalide is Mg dichloride and Mg dibromide, the Ti halide is a Ti-tetrahalide and the silicon compound is a phenyl di- or trialkoxysilane or an alkyl di- or trialkoxysilane.

3. Use of a solid component comprising an anhydrous Mg dihalide in active from as essential support and supported on said Mg dihalide a Ti halide or a Ti haloalcoholate and an electron donor compound selected from a Si-compound containing one or more Si—$OR^1$, Si—$OCOR^1$ or Si—$NR^1_2$ bonds ($R^1$ being a hydrocarbyl radical) in an amount corresponding to a molar ratio with the supported halogenated Ti compound of 0.1 to 5 mols per mol of the Ti compound, wherein the anhydrous Mg dihalides in active form are the Mg dihalides showing in the X-ray powder spectrum of component c) a broadening of at least 30% of the most intense diffraction line which appears in the powder spectrum of the corresponding dihalide having 1 $m^2/g$ of surface area or the Mg dihalides showing an X-ray powder spectrum in which said most intense diffraction line is replaced by a halo with the intensity peak shifted with respect to the interplanar distance of the most intense line, and/or the Mg dihalides having a surface area, measured after treatment of component c) with boiling $TiCl_4$ for 2 hours, greater than 3 $m^2/g$ for the preparation of a catalyst according to claim 1.

4. Use of a solid component according to claim 3, characterized in that the Mg dihalide is Mg dichloride and Mg dibromide, the Ti halide is a Ti-tetrahalide and the silicon compound is a phenyl di- or trialkoxysilane or an alkyl di- or trialkoxysilane.

5. Process for the polymerization of alpha olefins $CH_2$=CHR in which R is an alkyl radical with 1 to 4 carbon atoms or an aryl radical and mixtures of said olefins with ethylene, characterized in that the polymerization process is carried out in liquid phase in presence or not of an inert hydrocarbon solvent or in gas phase, in presence of a catalyst as defined in claims 1 and 2.

**Patentansprüche für die Vertragsstaaten: BE CH DE FR GB IT LI NL SE**

1. Katalysatoren zur Polymerisation von alpha-Olefinen, erhältlich durch Umsetzung

a) einer Organoaluminiumverbindung,

b) einer Elektronen-Donorverbindung, und

c) einer festen Komponente, die eine Ti-Verbindung und eine Elektronen-Donorverbindung auf einem Mg-Dihalogenid in aktiver Form umfaßt, dadurch gekennzeichnet, daß

a) eine Al-Trialkylverbindung oder eine Al - Alkylverbindung mit 2 oder mehr Al-Atomen, welche untereinander über ein Sauerstoff- oder Stickstoffatom oder über $SO_4$- oder $SO_3$-Gruppen verbunden sind, als Organo - Aluminiumverbindung verwendet wird;

b) eine Siliziumverbindung als Elektronen - Donorverbindung verwendet wird, die eine oder mehrere Si—$OR^1$, Si—$OCOR^1$ oder Si—$NR^1_2$-Bindungen enthält (worin $R^1$ einem Hydrocarbyl-Rest entspricht); und

c) ein festes Produkt verwendet wird, dessen wesentliche Komponente wenigstens aus einem wasserfreien Mg - Dihalogenid in aktiver Form als wesentlichem Träger besteht, wobei das Dihalogenid ein Ti-Halogenid oder ein Ti-Haloalkoholat und eine Siliziumverbindung mit einer oder mehreren Si—$OR^1$, Si—$OCOR^1$ oder Si—$NR^1_2$-Bindungen (worin $R^1$ einen Hydrocarbylrest bedeutet) in einer Menge trägt, die einem molaren Verhältnis mit der auf dem Träger befindlichen halogenierten Ti - Verbindung von 0,1 bis 5 Mol pro Mol der Ti-Verbindung entspricht,

wobei man das feste Produkt durch gemeinsames Vermahlen des wasserfreien Mg-Dihalogenids, des Ti - Halogenids oder des Ti - Haloalkoholates und der Siliziumverbindung, durch anschließende Hitzebehandlung des vermahlenen Produktes in einem halogenierten Kohlenwasserstoff und Abtrennung des festen Produktes erhält,

wobei das wasserfreie Mg-Dihalogenid in aktiver Form

ein Mg-Dihalogenid ist, welches in einem Röntgen-Pulverspektrum der Komponente c) eine Verbreiterung von mindestens 30% für die intensivste Beugungslinie zeigt, welche in einem Pulverspektrum des entsprechenden Dihalogenids mit einer Oberfläche von 1 $m^2/g$ zu finden ist, oder

ein Mg-Dihalogenid ist, das ein Röntgen - Pulverspektrum zeigt, in dem die oben genannte intensivste Beugungslinie durch ein Halo mit einem Intensitätspeak ersetzt ist, der in bezug auf den interplanaren Abstand der intensivsten Linie verschoben ist und/oder ein Mg-Dihalogenid ist, das eine Oberfläche, größer als 3 $m^2/g$ aufweist, wenn man diese nach einer 2-stündigen Behandlung der Komponente c) mit siedendem $TiCl_4$ bestimmt.

2. Katalysatoren nach Anspruch 1, dadurch gekennzeichnet, daß das Mg-Dihalogenid in der festen Komponente c) ein Mg-Dichlorid und Mg-Dibromid ist, das Ti-Halogenid ein Ti-Tetrahalogenid ist und die Siliziumverbindung ein Phenyl-di- oder -trialkoxysilan oder ein Alkyl-di- oder -trialkoxysilan ist.

3. Verwendung einer festen Komponente zur Herstellung eines Katalysators nach Anspruch 1, wobei die feste Komponente umfaßt:

ein wasserfreies Mg-Dihalogenid in aktiver Form als wesentlichen Träger und auf dem Mg-Dihalogenid

befindlich ein Ti-Halogenid oder ein Ti - Haloalkoholat und eine Elektronen-Donorverbindung, ausgewählt unter einer Si - Verbindung mit einer oder mehreren Si—OR[1], Si—OCOR[1] oder Si—$NR^1_2$-Bindungen (worin R[1] einen Hydrocarbylrest bedeutet), in einer Menge, die einem molaren Verhältnis mit der auf dem Träger befindlichen halogenierten Ti-Verbindung von 0,1 bis 5 Mol pro Mol der Ti - Verbindung entspricht,

wobei die wasserfreien Mg-Dihalogenide in aktiver Form Mg - Dihalogeniden entsprechen, die im Röntgen - Pulverspektrum der Komponente c) eine Verbreiterung von wenigstens 30% für die intensivste Beugungslinie zeigen, welche im Pulverspektrum des entsprechenden Dihalogenids mit einer Oberfläche von 1 $m^2/g$ zu finden ist, oder Mg - Dihalogeniden entsprechen, welche ein Röntgen - Pulverspektrum zeigen, in dem die genannte intensivste Beugungslinie durch ein Halo ersetzt ist, wobei der Intensitätspeak in bezug auf den interplanaren Abstand der intensivsten Linie verschoben ist und/oder Mg - Dihalogeniden entsprechen, die eine Oberfläche, größer als 3 $m^2/g$ aufweisen, wenn man diese nach einer zweistündigen Behandlung der Komponente c) mit siedendem $TiCl_2$ bestimmt.

4. Verwendung einer festen Komponente gemäß Anspruch 3, dadurch gekennzeichnet, daß das Mg-Dihalogenid Mg-Dichlorid und Mg-Dibromid ist, das Ti-Halogenid ein Ti - Tetrahalogenid ist und die Siliziumverbindung ein Phenyl - di - oder - trialkoxysilan oder ein Alkyl - di - oder - trialkoxysilan ist.

5. Verfahren zur Polymerisation von alpha-Olefinen der Formel $CH_2=CHR$, worin R eine Alkylrest mit 1 bis 4 Kohlenstoffatomen oder einen Arylrest bedeutet,

und Gemischen dieser Olefine mit Ethylen, dadurch gekennzeichnet, daß die Polymerisationsreaktion in flüssiger Phase, gegebenenfalls in Anwesenheit eines inerten Kohlenwasserstoffs als Lösungsmittel oder in einer Gasphase, in Gegenwart eines Katalysators gemäß der Definition der Ansprüche 1 und 2, durchgeführt wird.

**Patentansprüche für den Vertragsstaat: AT**

1. Verfahren zur Herstellung von Katalysatoren für die Polymerisation von alpha-Olefinen durch Umsetzung von

a) einer Organoaluminiumverbindung,

b) einer Elektronen-Donorverbindung, und

c) einer festen Komponente, die eine Ti-Verbindung und eine Elektronen - Donorverbindung auf einem Mg-Dihalogenid in aktiver Form umfaßt, dadurch gekennzeichnet, daß

a) eine Al-Trialkylverbindung oder eine Al - Alkylverbindung mit 2 oder mehr Al-Atomen, welche untereinander über ein Sauerstoff- oder Stickstoffatom oder über $SO_4$- oder $SO_3$-Gruppen verbunden sind, als Organo - Aluminiumverbindung verwendet wird;

b) eine Siliziumverbindung als Elektronen - Donorverbindung verwendet wird, die eine oder mehrere Si—OR[1], Si—OCOR[1] oder Si—$NR^1_2$-Bindungen enthält (worin R[1] einem Hydrocarbyl-Rest entspricht); und

c) ein festes Produkt verwendet wird, dessen wesentliche Komponente wenigstens aus einem wasserfreien Mg-Dihalogenid in aktiver Form als wesentlichem Träger besteht, wobei das Dihalogenid ein Ti-Halogenid oder ein Ti-Haloalkoholat und eine Siliziumverbindung mit einer oder mehreren Si—OR[1], Si—OCOR[1] oder Si—$NR^1_2$ - Bindungen (worin R[1] einen Hydrocarbylrest bedeutet) in einer Menge trägt, die einem molaren Verhältnis mit der auf dem Träger befindlichen halogenierten Ti - Verbindung von 0,1 bis 5 Mol pro Mol der Ti - Verbindung entspricht.

wobei man das feste Produkt durch gemeinsames Vermahlen des wasserfreien Mg-Dihalogenids, des Ti-Halogenids oder des Ti - Haloalkoholates und der Siliziumverbindung, durch anschließende Hitzebehandlung des vermahlenen Produktes in einem halogenierten Kohlenwasserstoff und Abtrennung des festen Produktes erhält,

wobei das wasserfreie Mg-Dihalogenid in aktiver Form

ein Mg-Dihalogenid ist, welches in einem Röntgen - Pulverspektrum der Komponente c) eine Verbreiterung von mindestens 30% für die intensivste Beugungslinie zeigt, welche in einem Pulverspektrum des entsprechenden Dihalogenides mit einer Oberfläche von 1 $m^2/g$ zu finden ist, oder

ein Mg-Dihalogenid ist, das ein Röntgen-Pulverspektrum zeigt, in dem die oben genamnte intensivste Beugungslinie durch ein Halo mit einem Intensitätspeak ersetzt ist, der in bezug auf den interplanaren Abstand der intensivsten Linie verschoben ist und/oder

ein Mg-Dihalogenid ist, das eine Oberfläche, größer als 3 $m^2/g$ aufweist, wenn man diese nach einer 2 - stündigen Behandlung der Komponente c) mit siedendem $TiCl_4$ bestimmt.

2. Verfahren zur Herstellung von Katalysatoren gemäß Anspruch 1, dadurch gekennzeichnet, daß das Mg-Dihalogenid in der festen Komponente c) ein Mg-Dichlorid und Mg-Dibromid ist, das Ti-Halogenid ein Ti - Tetrahalogenid ist und die Siliziumverbindung ein Phenyl-di- oder - trialkoxysilan oder ein Alkyl-di- oder -trialkoxysilan ist.

3. Verwendung einer festen Komponente zur Herstellung eines Katalysators nach Anspruch 1, wobei die feste Komponente umfaßt:

ein wasserfreies Mg-Dihalogenid in aktiver Form als wesentlichen Träger und auf dem Mg-Dihalogenid befindlich ein Ti-Halogenid oder ein Ti - Haloalkoholat und eine Elektronen - Donorverbindung, ausgewählt unter einer Si - Verbindung mit einer oder mehreren Si—OR[1], Si—OCOR[1] oder Si—$NR^1_2$-Bindungen (worin R[1] einen Hydrocarbylrest bedeutet), in einer Menge, die einem molaren Verhältnis mit

der auf dem Träger befindlichen halogenierten Ti - Verbindung von 0,1 bis 5 Mol pro Mol der Ti - Verbindung entspricht,

wobei die wasserfreien Mg-Dihalogenide in aktiver Form Mg-Dihalogeniden entsprechen, die im Röntgen-Pulverspektrum der Komponente c) eine Verbreiterung von wenigstens 30% für die intensivste Beugungslinie zeigen, welche im Pulverspektrum des entsprechenden Dihalogenids mit einer Oberfläche von 1 $m^2/g$ zu finden ist, oder Mg-Dihalogeniden entsprechen, welche ein Röntgen - Pulverspektrum zeigen, in dem die genannte intensivste Beugungslinie durch ein Halo ersetzt ist, wobei der Intensitätspeak in bezug auf den interplanaren Abstand der intensivsten Linie verschoben ist und/oder Mg - Dihalogeniden entsprechen, die eine Oberfläche, größer als 3 $m^2/g$ aufweisen, wenn man diese nach einer zweistündigen Behandlung der Komponente c) mit siedendem $TiCl_2$ bestimmt.

4. Verwendung einer festen Komponente gemäß Anspruch 3, dadurch gekennzeichnet, daß das Mg - Dihalogenid Mg - Dichlorid und Mg-Dibromid ist, das Ti-Halogenid ein Ti-Tetrahalogenid ist und die Siliziumverbindung ein Phenyl - di - oder - trialkoxysilan oder ein Alkyl-di- oder-trialkoxysilan ist.

5. Verfahren zur Polymerisation von alpha-Olefinen der Formel $CH_2{=}CHR$, worin R einen Alkylrest mit 1 bis 4 Kohlenstoffatomen oder einen Arylrest bedeutet,

und Gemischen dieser Olefine mit Ethylen, dadurch gekennzeichnet, daß die Polymerisationsreaktion in flüssiger Phase, gegebenenfalls in Anwesentheit eines inerten Kohlenwasserstoffs als Lösungsmittel oder in einer Gasphase, in Gegenwart eines Katalysators gemäß der Definition der Ansprüche 1 und 2, durchgeführt wird.

**Revendications pour les Etats Contractants: BE, CH, DE, FR, GB, IT, LI, LU, NL, SE**

1. Catalyseurs pour la polymérisation d'alpha-oléfines obtenues par réaction:

a) d'un composé organo-aluminium,

b) d'un composé électro-donneur, et,

c) d'un constituant solide contenant un composé du titane et un composé électro-donneur fixé sur un support à base de dihalogénure de magnésium, sous forme active,

caractérisé en ce que:

a) un utilise en tant que composé organo-aluminium, un composé de trialkyl-aluminium ou un composé d'alkylaluminium contenant au moins deux atomes d'aluminium liés entre eux par un atome d'oxygène ou d'azote ou par des groupes $SO_4$ ou $SO_3$,

b) on utilise en tant que composé électro-donneur un composé du silicium contenant une ou plusieurs liaisons $Si{-}OR^1$, $Si{-}OCOR^1$ ou $Si{-}NR^1_2$ ($R^1$ étant un radical hydrocarboné),

c) on utilise un produit solide comprenant en tant que constituant essentiel un support contenant au moins un dihalogènure de magnésium anhydre, sous forme active, et, sur lequel est fixé un halogénure de titane ou un haloalcoolate de titane et un composé du silicium contenant une ou plusieurs liaisons $Si{-}OR^1$, $Si{-}OCOR^1$ ou $Si{-}NR^1_2$ ($R^1$ étant un radical hydrocarboné), en une quantité correspondant à un rapport molaire, exprimé par rapport au composé de titane halogéné fixé sur un support, compris entre 0,1 et 5 moles par mole du composé de titane,

ledit produit solide étant obtenu par cobroyage du dihalogénure de magnésium anhydre, de l'halogénure ou de l'haloalcoolate de titane et du composé de silicium, par traitement thermique du produit broyé dans un hydrocarbure halogéné puis par séparation du produit solide, dans lequel le dihalogénure de magnésium anhydride sous forme active est:

un dihalogénure de magnésium dont le spectre de poudre aux rayons X du constituant c présente un élargissement d'au moins 30% de la raie de diffraction la plus intense que présente le spectre de poudre du dihalogénure correspondant ayant une aire superficielle de 1 $m^2/g$, ou

un dihalogénure de magnésium dont dans le spectre de poudre aux rayons X la raie de diffraction le plus intense est remplacée par un halo dont le pic d'intensité est déplacé par rapport à la distance interplanaire de la raie la plus intense, et/ou

un dihalogénure de magnésium dont l'aire superficielle, mesurée après traitement pendant deux heures du constituant c par du $TiCl_4$ bouillant, est supérieure à 3 $m^2/g$.

2. Catalyseurs tels que définis dans la revendication 1, caractérisé en ce que dans le constituant solide c, le dihalogénure de magnésium est le dichlorure de magnésium et le dibromure de magnésium, l'halogénure de titane est le tétrahalogénure de titane et le composé de silicium est un phényl dialkoxysilane ou un phényl trialkoxysilane ou un alkyl dialkoxysilane ou un alkyl trialkoxysilane.

3. Application à la préparation d'un catalyseur selon la revendication 1, d'un constituant solide comprenant essentiellement en tant que support du dihalogénure de magnésium sous forme active et, fixé sur ledit support à base de dihalogénure de magnésium, un halogénure ou haloalcoolate de titane et un composé électro-donneur consistant en un composé du silicium contenant une ou plusieurs liaisons $Si{-}OR^1$, $Si{-}OCOR^1$ ou $Si{-}NR^1_2$ ($R^1$ étant un radical hydrocarboné), en une quantité correspondant à un rapport molaire, exprimé par rapport au composé de titane halogéné fixé sur le support, compris entre 0,1 et 5 moles par mole du composé du titane, dans lequel les dihalogénures de magnésium anhydre sous forme active sont:

les dihalogénures de magnésium dont le spectre de poudre aux rayons X du constituant c présente un

élargissement d'au moins 30% de la raie de diffraction la plus intense que présente le spectre de poudre du dihalogénure correspondant ayant une aire superficielle de 1 $m^2/g$, ou

les dihalogénures de magnésium dont le spectre de poudre aux rayons X la raie de diffraction la plus intense est remplacée par un halo dont le pic d'intensité est déplacé par rapport à la distance interplanaire de la raie la plus intense, et/ou

les dihalogénures de magnésium dont l'aire superficielle, mesurée après traitement pendant deux heures du constituant c par du $TiCl_4$ bouillant est supérieure à 3 $m^2/g$.

4. Application à la préparation d'un catalyseur selon la revendication 3, caractérisé en ce que dans le constituant solide c, le dihalogénure de magnésium est le dichlorure de magnésium et le dibromure de magnésium, l'halogénure de titane est le tétrahalogénure de titane et le composé de silicium est un phényl dialkoxysilane ou un phényl trialkoxysilane ou un alkyl dialkoxysilane ou un alkyl trialkoxysilane.

5. Procédé de polymérisation des alpha-oléfines $CH_2$=CHR dans lesquelles R est un radical alkyle comprenant 1 à 4 atomes de carbone ou un radical aryle, et des mélanges desdites oléfines avec l'éthylène, caractérisé en ce que le procédé de polymérisation est mis en oeuvre en phase liquide en présence ou en l'absence d'un solvant hydrocarboné inerte ou en phase gazeuse et en présence d'un catalyseur tel que défini dans les revendications 1 et 2.

**Revendications pour l'Etat Contractant: AT**

1. Un procédé de production de catalyseurs de polymérisation d'alpha-oléfines obtenus par réaction:

a) d'un composé organo-aluminium,

b) d'un composé électro-donneur, et,

c) d'un constituant solide contenant un composé du titane et un composé électro-donneur fixé sur un support à base de dihalogénure de magnésium, sous forme active,

caractérisé en ce que:

a) on utilise en tant que composé organo-aluminium, un composé de trialkyl-aluminium ou un composé d'alkyl-aluminium contenant au moins deux atomes d'aluminium liés entre eux par un atome d'oxygène ou d'azote ou par des groupes $SO_4$ ou $SO_3$,

b) on utilise en tant que composé électro-donneur un composé du silicium contenant une ou plusieurs liaisons Si—$OR^1$, Si—$OCOR^1$ ou Si—$NR^1_2$ ($R^1$ étant un radical hydrocarboné),

c) on utilise un produit solide comprenant en tant que constituant essentiel un support contenant au moins un dihalogénure de magnésium anhydre, sous forme active, sur lequel est fixé un halogénure de titane ou un haloalcoolate de titane et un composé du silicium contenant une ou plusieurs liaisons Si—$OR^1$, Si—$OCOR^1$, ou Si—$NR^1_2$ ($R^1$ étant un radical hydrocarboné), en une quantité correspondant à un rapport molaire, exprimé par rapport au composé de titane halogéné fixé sur un support, compris entre 0,1 et 5 moles par mole du composé de titane,

ledit produit solide étant obtenu par cobroyage du dihalogénure de magnésium anhydre, de l'halogénure ou de l'haloalcoolate de titane et du composé de silicium, par traitement thermique du produit broyé dans un hydrocarbure halogéné puis par séparation du produit solide, dans lequel le dihalogénure de magnésium anhydre sous forme active est:

un dihalogénure de magnésium dont le spectre de poudre aux rayons X du constituant c présente un élargissement d'au moins 30% de la raie de diffraction la plus intense que présente le spectre de poudre du dihalogénure correspondant ayant une aire superficielle de 1 $m^2/g$, ou

un dihalogénure de magnésium dont dans le spectre de poudre aux rayons X la raie de diffraction la plus intense est remplacée par un halo dont le pic d'intensité est déplacé par rapport à la distance interplanaire de la raie la plus intense, et/ou

un dihalogénure de magnésium dont l'aire superficielle, mesurée après traitement pendant deux heures du constituant c par du $TiCl_4$ bouillant, est supérieure à 3 $m^2/g$.

2. Un procédé de production de catalyseurs tels que définis dans la revendication 1, caractérisé en ce que dans le constituant solide c, le dihalogénure de magnésium est le dichlorure de magnésium et le dibromure de magnésium, l'halogénure de titane est le tétrahalogénure de titane et le composé de silicium est un phényl dialkoxysilane ou un phényl trialkoxysilane ou un alkyl dialkoxysilane ou un alkyl trialkoxysilane.

3. Application à la préparation d'un catalyseur selon la revendication 1, d'un constituant solide comprenant essentiellement en tant que support du dihalogénure de magnésium sous forme active et, fixé sur ledit support à base de dihalogénure de magnésium, un halogénure ou haloalcoolate de titane et un composé électro-donneur consistant en un composé du silicium contenant une ou plusieurs liaisons Si—$OR^1$, Si—$OCOR^1$ ou Si—$NR^1_2$ ($R^1$ étant un radical hydrocarboné), en une quantité correspondant à un rapport molaire, exprimé par rapport au composé de titane halogéné fixé sur le support, compris entre 0,1 et 5 moles par mole du composé du titane, dans lequel les dihalogénures de magnésium anhydre sous forme active sont:

les dihalogénures de magnésium dont le spectre de poudre aux rayons X du constituant c présente un élargissement d'au moins 30% de la raie de diffraction la plus intense que présente le spectre de poudre du dihalogénure correspondant ayant une aire superficielle de 1 $m^2/g$, ou

les dihalogénures de magnésium dont le spectre de poudre aux rayons X la raie de diffraction la plus

intense est remplacée par un halo dont le pic d'intensité est déplacé par rapport à la distance interplanaire de la raie la plus intense, et/ou

les dihalogénures de magnésium dont l'aire superficielle, mesurée après traitement pendant deux heures du constituant c par du $TiCl_4$ bouillant, est supérieure à 3 $m^2/g$.

4. Application à la préparation d'un catalyseur selon la revendication 3, caractérisé en ce que dans le constituant solide c, le dihalogénure de magnésium est le dichlorure de magnésium et le dibromure de magnésium, l'halogénure de titane est le tétrahalogénure de titane et le composé de silicium est un phényl dialkoxysilane ou un phényl trialkoxysilane ou un alkyl dialkoxysilane ou un alkyl trialkoxysilane.

5. Procédé de polymérisation des alpha-oléfines $CH_2=CHR$ dans lesquelles R est un radical alkyle comprenant 1 à 4 atomes de carbone ou un radical aryle, et des mélanges desdites oléfines avec l'éthylène, caractérisé en ce que le procédé de polymérisation est mis en oeuvre en phase liquide en présence ou en l'absence d'un solvant hydrocarboné inerte ou en phase gazeuse et en présence d'un catalyseur tel que défini dans les revendications 1 et 2.